# EUROPEAN PATENT SPECIFICATION

(11) **EP 1 526 505 B1**
(45) Date of publication and mention of the grant of the patent: **27.12.2006**
(21) Application number: 04024978.1
(22) Date of filing: 20.10.2004
(51) Int. Cl.: G10L 17/00, G07C 9/00

(54) **Vocal print authentication system and vocal print authentication program**
System und Programm zur Authentifizierung anhand eines Stimmenabdrucks
Système et logiciel d'authentification au moyen d'une empreinte vocale

(30) Priority: 24.10.2003 JP 2003364711
(43) Date of publication of application: 27.04.2005
(73) Proprietor: Aruze Corp., Tokyo (JP)
(72) Inventor: Fujimoto, Jun, Tokyo (JP)
(74) Representative: Grünecker, Kinkeldey, Stockmair & Schwanhäusser Anwaltssozietät

(56) References cited:
- EP-A- 0 762 340
- EP-A- 0 856 836
- WO-A-01/23982
- WO-A-99/42992
- US-A- 5 293 452

## Description

### CROSS-REFERENCES TO THE RELATED APPLICATIONS

This application is based upon and claims the priority from a prior published Japanese patent applications No. JP-A-2005128307, filed on October, 24, 2003, in Japan.

### BACKGROUND OF THE INVENTION

### 1. FIELD OF THE INVENTION:

The present invention relates to an authentication system using vocal prints and a vocal print authentication program, and more particularly to a vocal print authentication system and a vocal print authentication program which prevent an illegal use by an unauthorized user who disguises an authorized user.

### 2. RELATED ART:

When a user gets access to a system, the personal authentication to identify an authorized user using a password has been generally performed.

In such personal authentication using the password, to prevent an illegal access attributed to stealing of password, there has been proposed an authentication system in which a plurality of passwords are preliminarily prepared and the authentication is made using one password selected from the plurality of passwords (see Japanese Laid-open Patent Publication JP-A-2001-209614).

This authentication system is an authentication system which includes a plurality of terminals and a connection device to which the plurality of terminals are connected, wherein the connection device and the plurality of terminals respectively have a plurality of passwords, the password which is used for authentication is selected by changing these passwords along with a lapse of time, and the communication between the terminals is allowed only when the password produced at the connection device side is coincided with the password produced at the terminal side.

Further, as in the case of the above-mentioned patent document, in performing the personal authentication by collating the password which the authenticating side has and the password which the authenticated side has, there has been a drawback that it is necessary to prepare a plurality of passwords preliminarily and to record these passwords on a connection device side which performs the personal authentication and terminal sides which request the personal authentication. Further, to select the password to be used among a plurality of these passwords, there also exists a drawback that it is necessary to provide password controllers which select the equal password on both of the connection device side and the terminal side. On the other hand, there has been also known an authentication system which performs the personal authentication based on the vocal print authentication which is performed using a voice password formed of a vocal print of the authorized user himself.

The authentication system using the voice password can authenticate whether the user is himself or not based on the vocal print intrinsic to the user whereby the user can easily perform the personal authentication.

WO-A-99/42992 according to the preamble of claims 1 and 14 discloses a vocal print authentication system and a vocal print authentication vocal product comprising a memory for recording vocal print data of snippets for each registrant. A snip selector selects a plurality of snippets to form a password. The signals representing the randomly selected snippets are transmitted to a display. A snippet comparator receives the signals issued by a user and compares same with the data of the snippet selector to determine as to whether an access is granted or denied.

### SUMMARY OF THE INVENTION

However, with respect to the vocal print authentication using the voice password, there exists a drawback that when a third party having an evil intention illegally obtains the specific voice password by recording or the like, the illegal authentication is performed.

Here, it may be possible to consider a method which prevents the illegal access due to stealing of the password using a plurality of voice passwords. However, a considerable time is required for registering a large number of voice passwords and, at the same time; at the time of changing the voice password for enhancing the security, it is necessary to newly record a large number of voice passwords each time the changes made.

In this manner, to maintain the security using the plurality of voice passwords, there has been a drawback that the registration and the change of the voice passwords which require a long time must be repeated.

It is the object of the present invention to provide a vocal print authentication system and a vocal print authentication program, which combines uncomplicated use with high security.

This object is solved by the features of claims 1 and 14, respectively.

Since according to the invention, a time interval between elements is sampled when voice data is inputted into the system and this time interval is used in the determination process; the security of the system is further enhanced.

Further embodiments are laid down in the subclaims.

### BRIEF DESCRIPTION OF THE DRAWINGS

Fig. 1 is a view for explaining a constitutional example which is applicable to the first to third embodiments of a vocal print authentication system of the present invention;
Fig. 2 is a flowchart for explaining the first embodiment of the vocal print authentication system of the present invention;
Fig. 3 is a view for explaining an example of the vocal print data of the vocal print authentication system of the present invention;
Fig. 4 is a view for explaining an operational example of the first embodiment of the vocal print authentication system of the present invention;
Fig. 5A is a view for explaining a comparison operational example of the vocal data of the first embodiment of the vocal print authentication system of the present invention;
Fig. 5B is a view for explaining a comparison operational example of the vocal data of the first embodiment of the vocal print authentication system of the present invention;
Fig. 6 is a flowchart for explaining the second and the third embodiments of the vocal print authentication system of the present invention;
Fig. 7A is a view for explaining the comparison operational example of the vocal data of the second and the third embodiments of the vocal print authentication system of the present invention;
Fig. 7B is a view for explaining the comparison operational example of the vocal data of the second and the third embodiments of the vocal print authentication system of the present invention; and
Fig. 8 is a view for explaining the comparison operational example of the vocal data of the second and the third embodiments of the vocal print authentication system of the present invention.

### DESCRIPTION OF THE PREFERRED EMBODIMENTS

The vocal print authentication system according to the present invention is characterized by registering vocal print data of respective elements which constitute a password in place of registering voice passwords which are obtained by uttering passwords. Due to such a constitution, the authentication side can form the vocal data for the password which is arbitrarily formed using vocal print data which is registered. The authentication side can perform the personal authentication by comparing the formed vocal data and the vocal data of the password which the authentication requesting person utters.

According to the vocal print authentication system of the present invention, although the vocal print data of the respective elements which constitute the password are registered, the registration of the voice password per se is not necessary. Accordingly, it is no more necessary to perform the cumbersome operation that, with respect to the passwords which are arbitrarily set, voice is uttered for every password and the voice passwords are registered.

The vocal print authentication system according to this embodiment comprises voice recording means for recording vocal print data of single elements of numbers and/or letters which constitute a password and vocal print data of link elements which link the respective single elements for every registrant, password forming means for forming a random password using the respective elements, vocal data forming means for forming vocal data which is obtained by vocalizing the password formed by the password forming means using the vocal print data, and password determination means for determining whether a determination requesting person is the registrant or not based on the collation between vocal data which is obtained due to the inputting by voice of the password by the determination requesting person and the vocal data which is formed by the vocal data forming means.

Here, the elements which constitute the password include, in addition to the single elements such as numbers and letters, link elements which link these single elements. As these link elements, for example, elements which express digits of numbers such as hundred, thousand and the like which link the elements of numbers can be named. Further, as other link elements, symbols such as <- (hyphen)>, <. (period, dot) >, <, (comma) > can be used.

The password forming means form the password by combining the respective elements which constitute the password in a random manner. The number of letters and the content of the password can be arbitrarily set provided that the password includes the respective elements which are prepared in advance.

Further, the vocal print data is data which the registrant utters with respect to each element which constitutes the password.

The voice recording means is means for recording the vocal print data for every registrant and can establish the association of the vocal print data with the registrant by recording the vocal print data in association with the ID which is intrinsically set to each registrant.

The voice recording means acquires a plurality of voice inputting from the registrant with respect to the same element and the vocal print data is formed and recorded based on the plurality of acquired voice inputting. For example, the extension of the vocal print data having the plurality of voice inputting is recorded as the authentication range.

The vocal data forming means forms the vocal data of the password by linking the vocal print data corresponding to the respective elements which constitute the password. For example, assuming the password as <A-1234>, the elements of this password is <A>, <->, <1>, <2>, <34>, <thousand>, and <hundred>. The vocal data forming means form the vocal data of "a hyphen one thousand two hundred thirty four" by linking the vocal print data "a", "hyphen", "one", "two", "thirty four", "thousand", "hundred" which respectively correspond to these respective elements. Hereinafter, the vocal print data and the vocal data are expressed in a form of " ".

The vocal data forming means forms the vocal data of the password by linking the vocal print data corresponding to the respective elements and hence, it is unnecessary to register the vocal data for every password.

The password forming means starts the formation of random password by recognizing the ID which the determination requesting person who requests the authentication inputs.

The password request means forms a question which requests the inputting by voice of the above-mentioned password which the password forming means forms and also requests the determination requesting person the voice password which becomes an answer to the formed question. Here, for example, when an address is set as the password, a question such as 'what is your address?' is formed to make the determination requesting person input the address as the password by uttering voice thus requesting the determination requesting person to input the reply by uttering a voice. Hereinafter, the questions which the password request means forms in a vocal form are expressed in a form of ".

In the vocal print authentication system of the present invention, the plurality of embodiments are respectively considered with respect to the modes of the password and the vocal print authentication. The password of the first embodiment is a password which does not include sentences, wherein the authentication is performed using the vocal data of the whole password. The passwords of the second and the third embodiments are a password constituted of a sentence. Further, the second embodiment is directed to a mode in which the authentication is performed by sampling predetermined elements from the vocal data of the sentence password, while the third embodiment is directed to a mode in which the authentication is performed using the whole vocal data of the sentence password.

In the first embodiment, the password forming means selects at least two or more arbitrary number of single elements from the single elements constituted of numbers and/or letters and arranges the selected single elements in arbitrary order thus forming the password.

The vocal data forming means takes out the vocal print data corresponding to respective single elements which the password formed by the password forming means includes from the voice recording means, the vocal print data which are taken out in this manner are arranged in accordance with the arrangement order of the single elements of the password, and the link elements are inserted into the respective single elements thus forming the vocal data of the password.

In the first determination method performed by the password determination means, the vocal data of respective elements.which form the voice password by analyzing the voice which the determination requesting person inputs is sampled, and the sampled vocal data and the vocal data which is formed by the vocal data forming means are sequentially compared for respective elements which form the password. According to the first determination method, since the comparison is performed for each element unit, the comparison processing is facilitated whereby the comparison time can be shortened.

Further, in the second determination method performed by the password determination means, the vocal data of respective elements which form the voice password by analyzing the voice which the determination requesting person inputs is sampled, and the sampled vocal data and the vocal data which is formed by the vocal data forming means are compared based on the voice level of the serial password and/or a time interval between the respective elements. According to the second determination method, since the intonation at the time of uttering the password and a lapse of time can be compared and hence, the authentication accuracy can be enhanced.

In the second embodiment and the third embodiment, the password forming means forms the password by incorporating the single elements of numbers and/or letters at predetermined positions in the sentence which forms the password.

In the second embodiment, the vocal data forming means samples the vocal print data corresponding to the respective elements which the password formed by the password forming means is provided from the voice recorded means and the sampled vocal print data is arranged at positions where respective elements in the sentence are arranged thus forming the vocal data of the password.

Further, the password determination means performs the determination of the password by sampling the vocal data of respective elements which are included in the sentence which forms the voice password by analyzing the voice which the determination requesting person inputs and/or time interval of respective elements, and by comparing the sampled vocal data and/or time interval of respective elements and the vocal data which the vocal data forming means forms and/or time interval of respective elements in the sentence for every element which constitutes the password.

In the third embodiment, the voice recording means records elements of the clauses which are contained in the sentence which forms the password in addition to respective elements, the vocal data forming means samples the vocal print data of respective elements contained in the password formed by the password forming means from the voice recording means, and the respective vocal print data of respective elements included in the sentence which is formed by the password forming means is sampled from the voice recording means, and the vocal data in the password is formed by arranging the respective corresponding vocal print data at positions where the respective elements in the sentence are arranged.

Further, the password determination means samples the vocal data of the sentence which forms the password by analyzing the voice which the determination requesting person inputs, and performs the determination of the password by comparing the vocal data of sampled sentence and the vocal data of the sentence which the vocal data forming means forms.

Further, this embodiment includes control means which controls the above-mentioned voice authentication system and, in the memory of the control means, according to this embodiment, a vocal print authentication program for allowing voice recording means for recording vocal print data of single elements of numbers and/or letters which constitute a password and vocal print data of link elements which link the respective single elements for every registrant, password forming means for forming a random password using the respective elements, vocal data forming means for forming vocal data which is obtained by vocalizing the password formed by the password forming means using the vocal print data, and password determination means for determining whether a determination requesting person is the registrant or not based on the collation between vocal data which is obtained due to the inputting by voice of the password by the determination requesting person and the vocal data which is formed by the vocal data forming means to perform respective functions thereof is stored.

Embodiments of the present invention are explained in detail in conjunction with attached drawings hereinafter.

Here, although these embodiments are explained with respect to a case in which English is used as a language, the present invention is not limited to such a case and can be exercised suitably corresponding to various languages with proper modifications. For example, in the method for determining single elements of a password, various other factors such as accents, syllables and the like may be used besides factors used in the embodiment described hereinafter depending on the language to which the present invention is applied.

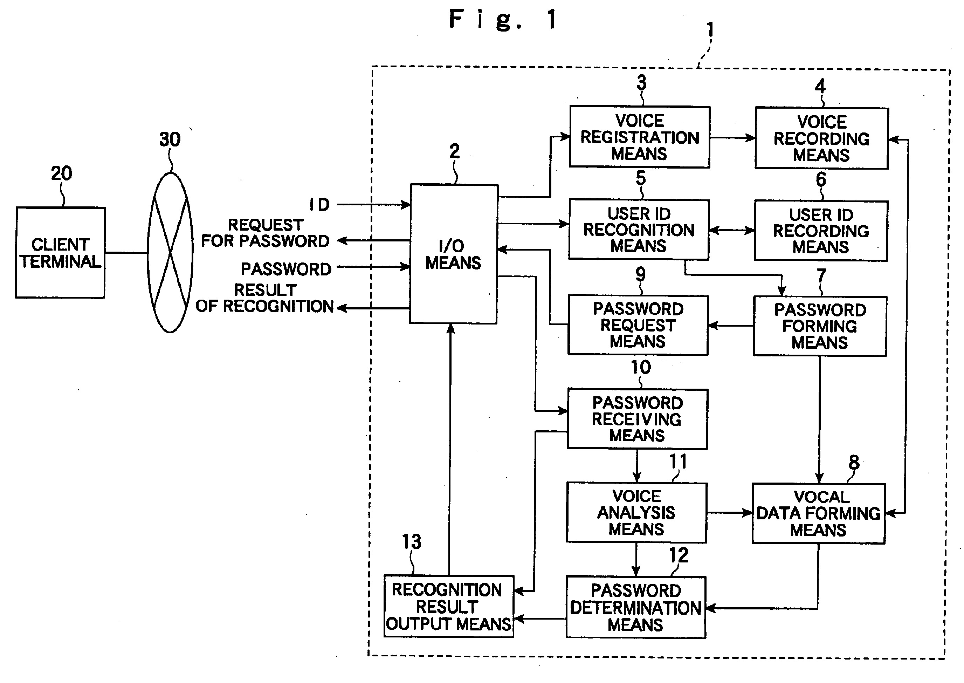

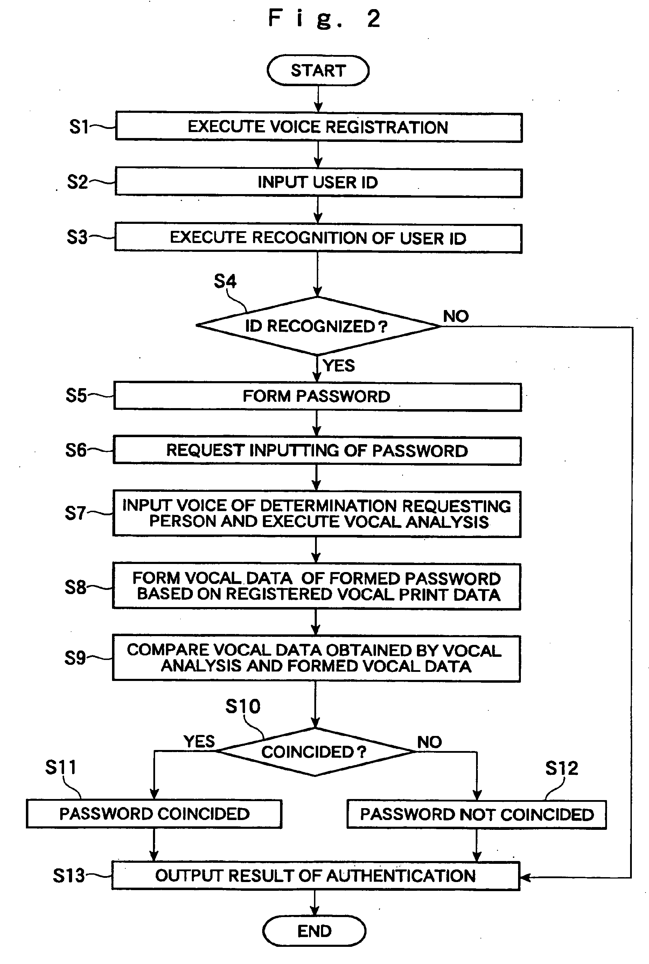

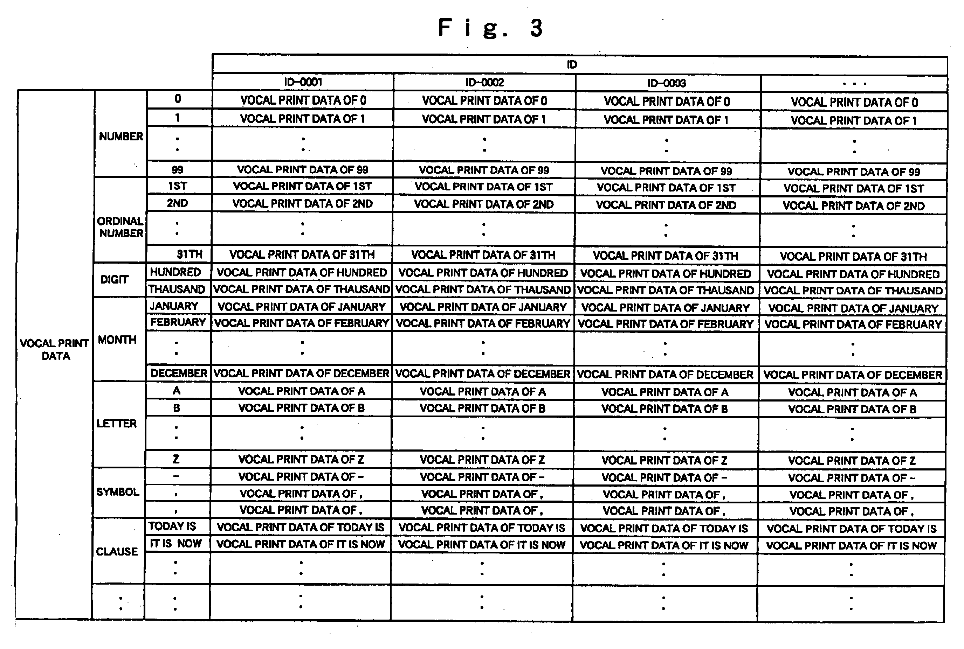

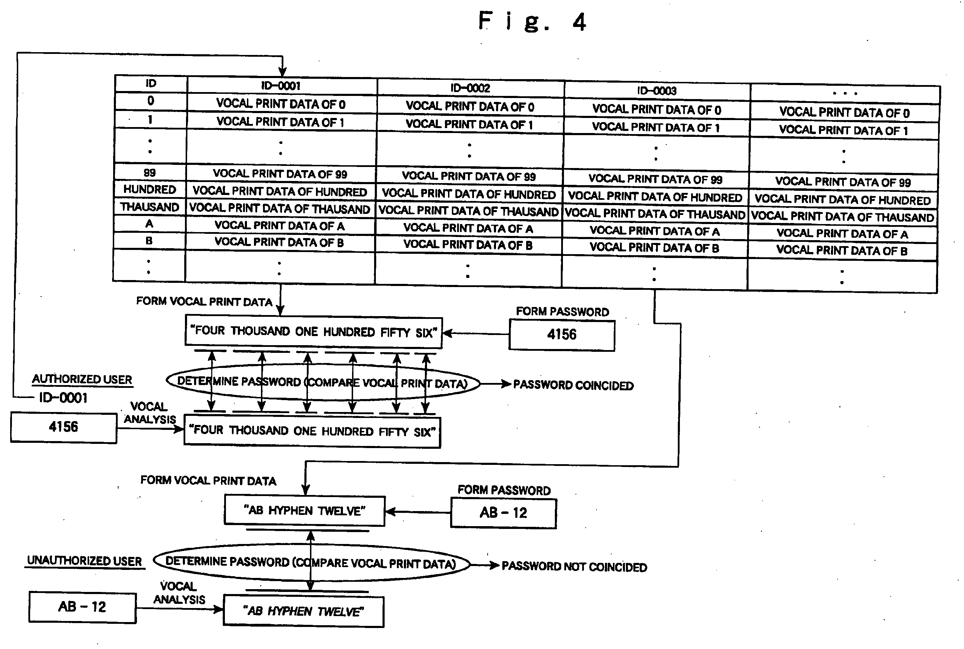

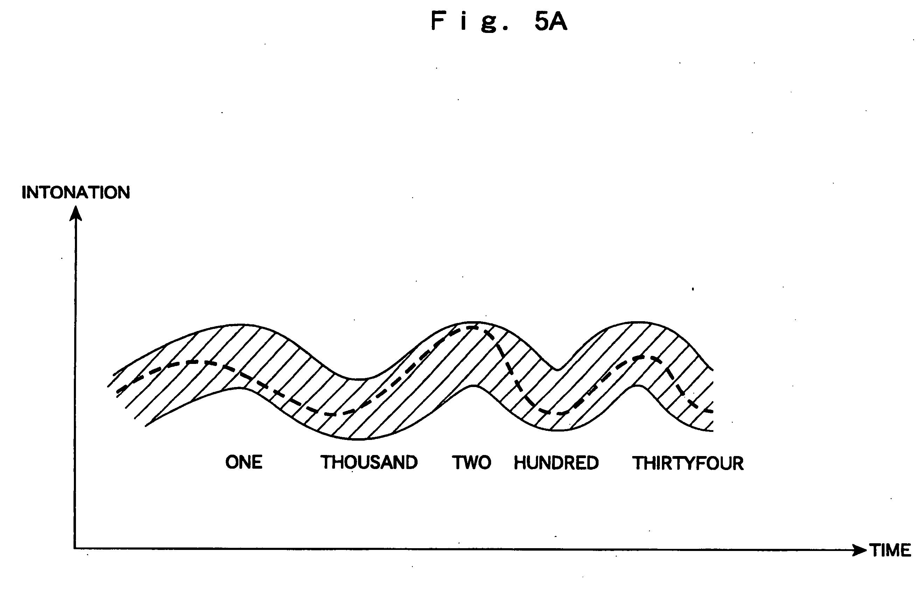

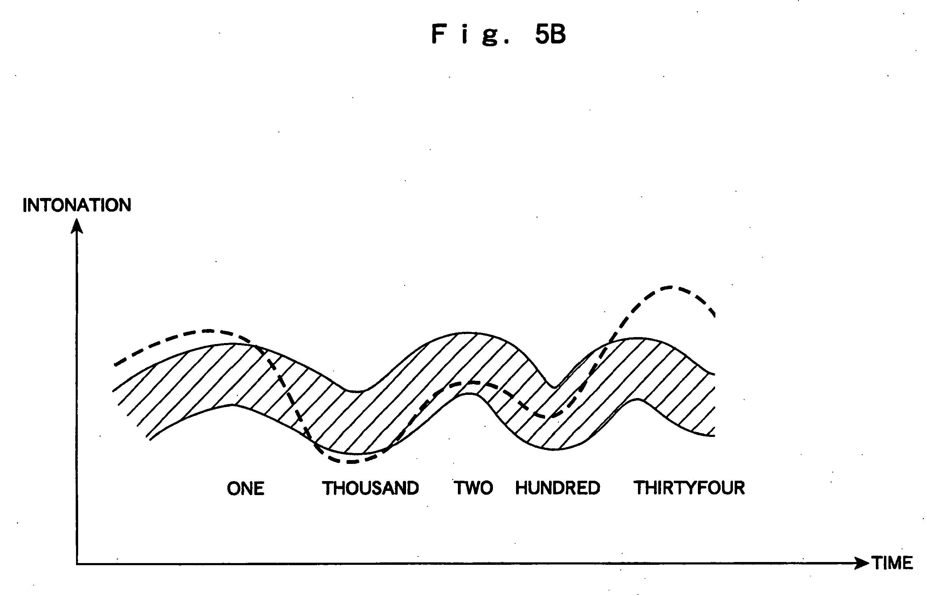

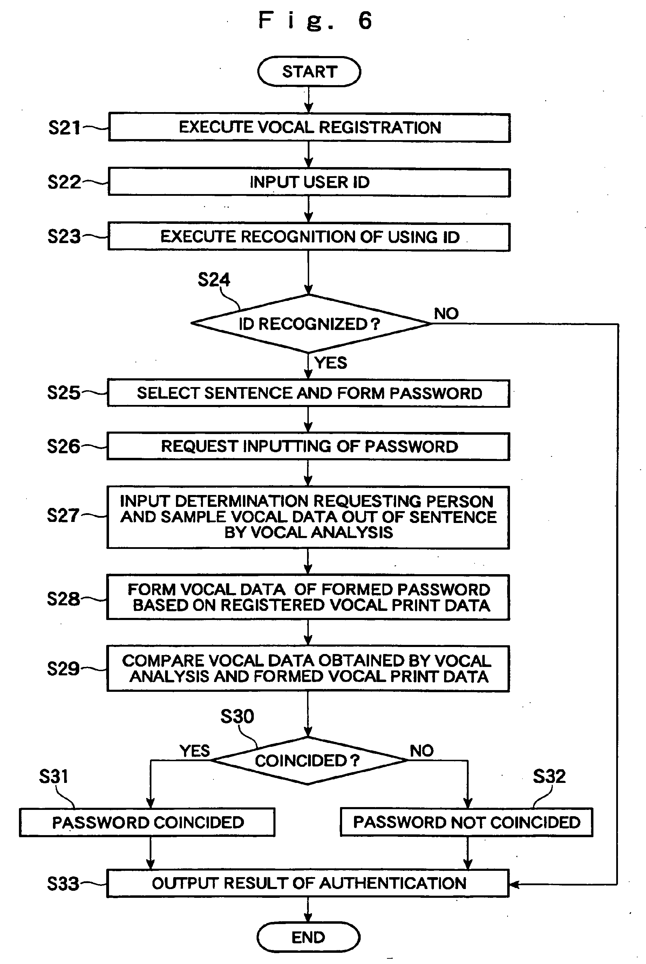

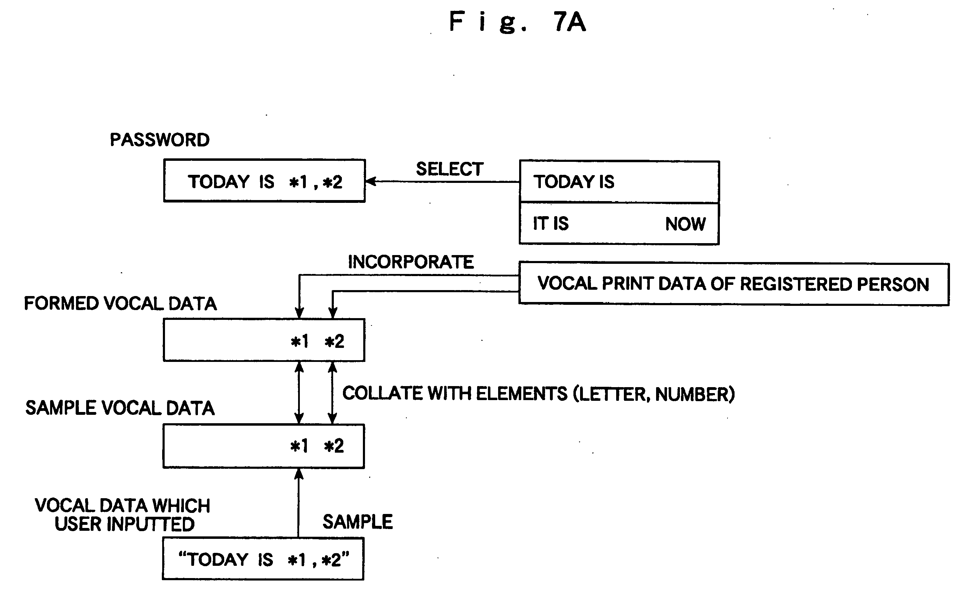

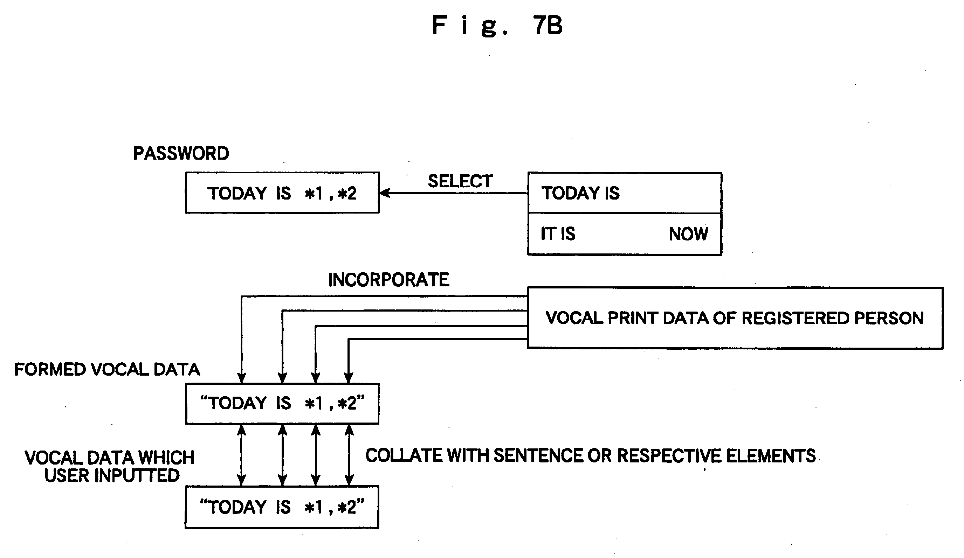

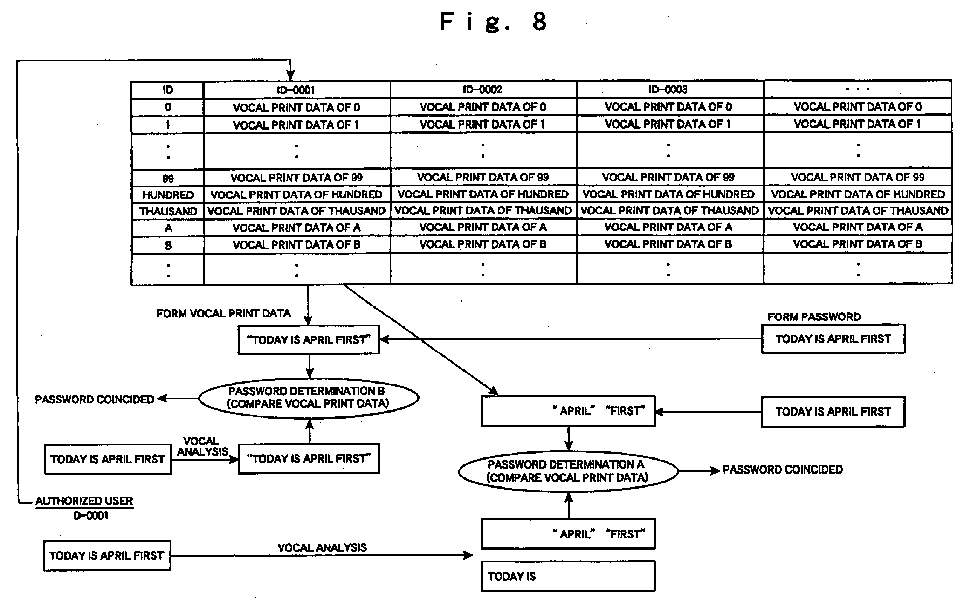

Hereinafter, a constitutional example which is applicable to the first to third embodiments of the vocal print authentication system of the present invention is explained using Fig. 1. A flowchart of the first embodiment of the vocal print authentication system of the present invention is explained using Fig. 2. An example of vocal print data of the vocal print authentication system of the present invention is explained using Fig. 3. An operational example of the first embodiment of the vocal print authentication system of the present invention is explained using Fig. 4. A comparison operational example of the vocal data of the first embodiment of the vocal print authentication system of the present invention is explained using Fig. 5A and Fig. 5B. A flowchart of the second and third embodiments of the vocal print authentication system of the present invention is explained using Fig. 6. Further, a comparison operational example of the vocal data of the second and third embodiments of the vocal print authentication system of the present invention is explained using Fig. 7A, Fig. 7B and Fig. 8.

First of all, the constitution which is applicable to the first to third embodiments of the present invention is explained using Fig. 1.

In Fig. 1, a vocal print authentication system 1 includes a voice registration means 3 which records the vocal print data of single elements such as numbers or letters and linking elements which link these single elements all of which constitute a password for every registrant, password forming means 7 which forms a randompassword using respective elements, vocal data formation means 8 which forms the vocal data of the password which is formed by the password forming means 7 using the vocal print data recorded in the voice recording means 4 by way of the voice registration means 3, and password determination means 12 which determines whether a person who requests the determination is the registrant or not by collating the vocal data obtained by the voice inputting of the password by the person who requests the determination and the vocal data which is formed by the above-mentioned vocal data formation means 8.

The password is constituted of the single elements such as the numbers or the letters, the symbols and the linking elements which link these single elements and symbols. These linking elements are, for example, constituted of linking elements which link numerical elements such as hundred, thousand which express digits of the number.

By continuously arranging the single elements constituted of a plurality of numbers, the password having several digits is formed. Here, the elements which express digits of the number such as hundred, thousand are used at the time of forming the vocal data from the password having the above-mentioned number of digits. Here, as the linking elements which constitute the password, symbols such as <-(hyphen)>, <. (period, dot)>, <, (comma)> can be used.

The voice registration means 3 makes the registrant utter voices with respect to respective elements of the password and the vocal print data of respective elements obtained by the utterance is stored for every registrant. The vocal print data are used as the constitutional elements at the time of forming the vocal data. The voice registration can be performed by converting the voices inputted by way of I/O means 2 into the vocal data using the voice registration means 3 and by recording the vocal data in the voice registration means 4 as the vocal print data.

The voice registration means 3 can obtain the relationship between the vocal print data and the registrant by recording the vocal print data by associating the vocal print data with the ID which is allocated to each registrant in an associated manner.

Further, the vocal print authentication system 1 includes user ID recognition means 5 and user ID recording means 6, and can determine the personal authentication using the ID before performing the vocal print authentication or simultaneously with the vocal print authentication. The user ID recognition means 5 can perform the personal authentication by comparing the ID which is inputted through the I/O means 2 and the ID which is registered and recorded in the user ID recording means 6 by the user himself/herself preliminarily. The recognition of the ID can enhance the security of the personal authentication in combination with the vocal print authentication and at the same time, plays a role of a start signal for starting the formation of the vocal data used in the vocal print authentication.

The voice registration means 3 can record one vocal print data for each element in the voice recording means 4 and, at the same time, can record the vocal print data having a certain width with respect to each element into the voice recording means 4. That is, the vocal print data which is obtained by the utterance of the registrant changes corresponding to the physical condition of the registrant or the environmental conditions and hence, the vocal print data is not always fixed. Accordingly, the registrant is required to utter voices a plurality of times and an average value which is obtained by averaging the vocal print data which is obtained by such utterance or a distribution range of a plurality of vocal print data expressed with a certain width is recorded as the vocal print data. The distribution range of the vocal print data becomes an allowable range of the vocal print data at the time of performing the personal authentication using the vocal print authentication.

Here, in recording the average value of the vocal print data, in the personal authentication, by setting a range which is displaced from the average value by a predetermined allowable width also as an allowable range, it is possible to perform the comparison of vocal data. The above-mentioned predetermined allowable width can be arbitrarily set, wherein by setting the narrow allowable width, the accuracy of the personal authentication can be enhanced, while by setting the wide allowable width, the degree of allowance of the personal authentication can be increased.

The password forming means 7 forms passwords by combining respective elements which constitute these passwords in an arbitrary manner or in a random manner. The number of letters and the content of the password can be arbitrarily set so long as the password includes respective elements such as letters, numbers, symbols and the like which are prepared in advance.

The password forming means 7 of the first embodiment selects at least two or more arbitrary number of single elements from the single elements constituted of numbers and/or letters and arranges the selected single elements in arbitrary order thus forming the password.

The password forming means 7 starts the formation of the password by collating and recognizing the ID which the determination requesting person who requires the authentication inputs with the registered ID using the user ID recognition means 5, for example.

The vocal print authentication system 1 makes the determination requesting person input the password formed by the password forming means 7 by uttering voices and performs the determination of the personal authentication based on whether the vocal data of the password coincides with the vocal data which is prepared on the vocal print authentication system 1 side.

Then, the vocal print authentication system 1 requests the determination requesting person to utter the formed password through the password request means 9. That is, password request means 9 forms a question to make the determination requesting person to input the password formed by the password forming means 7 by uttering voices, the question formed in this manner is transmitted to the determination requesting person through the I/O means 2, and requests the determination requesting person to input the password by uttering voices as a reply to the question.

For example, when an address is set as the password, a question such as 'what is your address?' is formed to make the determination requesting person input the address as the password by uttering voice thus requesting the inputting of the reply by uttering voice. Further, the password may be, other than the above-mentioned address, name, birth date, today's date and the like in an arbitrary manner. In this case, the corresponding questions may be 'May I have your name?' , 'When were you born?' , 'What is the day of the month is it today?' or the like. The password request means 9 records a program for preparing questions to reply these passwords.

In the above-mentioned example, the question corresponding to the password formed by the password forming means 7 is formed by the password request means 9. However, as an opposite mode, the question may be formed by the password request means 9 side and the password corresponding to the question may be formed based on the user information. In this mode, the user information is recorded in recording means not shown in the drawing and the password forming means 7 forms the password by reference to the user information.

The vocal print data is data which the registrant utters with respect to the respective elements which constitute the password. The vocal data forming means 8 forms the vocal data of the password by linking the vocal print data corresponding to the respective elements which constitute the password.

The vocal data forming means 8 of the first embodiment takes out the vocal print data corresponding to the respective elements included in the password formed by the password forming means 7 from the voice recording means 4. With respect to the vocal print data taken out in this manner, the vocal print data of the respective single elements are arranged in accordance with the arrangement order of the respective single elements of the password and the vocal print data of the link elements are inserted between the respective single elements thus forming the vocal data of the password.

For example, assuming the password as <A-1234>, the elements of this password is <A>, <->, <1>, <2>, <34>, <thousand>, and <hundred>. The vocal data forming means 8 forms the vocal data of "a hyphen one thousand two hundred thirty four" by linking the vocal print data "a", "hyphen", "one", "two", "thirty four", "thousand", "hundred" which respectively correspond to these respective elements.

In forming the vocal data, in reading the series of numbers, it is necessary to take the reading of digit portions into consideration and hence, the vocal data forming means 8 includes a vocal data forming program which determines the digits of the respective numbers and selects the vocal print data of the link elements corresponding to the digit elements and links the vocal print data of the respective single elements.

Here, the vocal print authentication system is provided with control means not shown in the drawing which controls the above-mentioned respective means including the above-mentioned vocal data forming means 8. That is, the control means stores a vocal print authentication program which allows the voice recording means 4, the password forming means 7 and the password determination means 12 to perform respective functions thereof. The voice authentication is performed based on this vocal print authentication program.

Further, in this embodiment, since the vocal data obtained by linking the vocal print data and the vocal data inputted by the determination requesting person coincide with each other, there arises no problem. However, there may be a case that even when the vocal print data corresponding to the respective elements are merely linked to form the vocal data, the vocal data is different from the vocal data which the determination requesting person utters. To perform the authentication smoothly in such a case, the vocal data forming means 8 may be provided with a program which takes, for example, the euphony at the time of uttering the numbers including digits so as to form the vocal data which is substantially equal to the reading which the determination requesting person actually utters.

The vocal data forming means 8 forms the vocal data of the password by linking the vocal print data corresponding to respective elements and hence, it is unnecessary for the vocal data forming means 8 to register the vocal data for each password.

The determination requesting person utters the password which the determination requesting person is requested to utter in response to the question transmitted to the determination requesting person and sends the password to the vocal print authentication system 1. The inputting of the voice that the determination requesting person utters and the vocal data thereof to the vocal print authentication system 1 may be performed by connecting a network 30 between the vocal print authentication system 1 and a client terminal 20. Besides the above constitution, it may be possible to adopt the constitution in which the voice that the determination requesting person utters and the vocal data thereof may be directly inputted to the vocal print authentication system 1.

When the vocal print authentication system 1 is connected with the client terminal 20 through the network 30, the present invention is applicable to the constitution in which the vocal print authentication system 1 is constituted of a server which is formed on the network and only the access which has cleared the personal authentication by the vocal print authentication system 1 can be connected to the target access. Further, when the client terminal 20 is directly connected with the vocal print authentication system 1, the vocal print authentication system is applicable to the constitution in which a mechanism for monitoring the invasion to an administration region is constituted of the vocal print authentication system 1 and only persons who have cleared the personal authentication conducted by the vocal print authentication system 1 are allowed to enter the inside of the administration region.

The vocal print authentication system 1 receives the uttered voice of the determination requesting person as the vocal data by the password receiving means 10 through the I/O means 2. The voice analysis means 11 performs a voice analysis of the vocal data received by the password receiving means 10 and obtains the vocal data having a signal form suitable for comparison with the vocal data formed by the vocal data forming means 8.

The password determination means 12 compares the vocal data sampled by the voice analysis means 11 and the vocal data formed by the vocal data forming means 8. In the first embodiment, in addition to the method which performs the comparison of vocal data for every element which forms the password, it is also possible to compare the sampled vocal data and the vocal data formed by the vocal data forming means 8 based on the voice level of serial passwords or a time interval between respective elements.

The result of the determination is transmitted to recognition result output means 13 from the password determination means 12. The recognition result output means 13 can transmit the recognition result to the client terminal 20 through the I/O means 2 and, at the same time, can transmit the recognition result to other servers on the network. Further, it is also possible to display the recognition result output on a display device not shown in the drawing.

Next, a processing example of the first embodiment of the vocal print authentication system 1 according to the present invention is explained using a flow chart shown in Fig. 2.

First of all, the voice registration is performed by the registrant. In this voice registration, the registrant is made to utter the respective elements which constitute the password and the vocal print data of these respective elements are recorded in the voice recording means 4 using the voice registration means 3 (step S1).

In requesting the determination of the personal authentication, the determination requesting person inputs the user ID (step S2) and the user ID recognition means 5 compares the inputted user ID and the user ID which is registered preliminarily in the user ID recording means 6 so as to perform the recognition based on the user ID (step S3).

When the ID is recognized (step S4), upon receiving the determination of this step, the password forming means 7 starts the formation of the password. The content and the number of letters of the password to be formed can be arbitrarily determined. For example, the content of the password can be selected from a plurality of candidates which are preliminarily registered or can be arbitrarily set at each point of time on the vocal print authentication system 1 side (step S5).

The password request means 9 forms a question content which expects the password formed by the password forming means 7 as an answer thereof and requests the inputting of the answer by uttering voice to the determination requesting person (step S6). The password receiving means 10 receives the voice signal from the determination requesting person and the voice analyzing means 11 analyzes the voice signal and forms the vocal data (step S7).

Here, in the password receiving means 10, a time which lapses from a point of time that the question is delivered is counted and, when the password is not received within a predetermined time, the processing for no response is executed. The recognition result output means 13, upon receiving the result that there is no response, outputs that the personal authentication is not performed. Further, also when the recognition of the ID in step S4 turns out to be unsuccessful, the recognition result output means 13 outputs that the personal authentication is not performed. On the other hand, the password forming means 7 samples the vocal data of the password using the registered vocal print data (step S8).

The password determination means 12 compares the vocal data obtained by the voice analysis performed by the voice analysis means 11 and the vocal data formed by the vocal data forming means 8 (step S9). When it is determined that both vocal data coincide with each other as a result of the comparison (step S10), it is assumed that the passwords coincide with each other (step S11). On the other hand, when it is determined that both vocal data do not coincide with each other as the result of the comparison (step S10), it is assumed that the passwords do not coincide with each other (step S12). Then, the result of the authentication is outputted (step S13).

Next, an operational example of the first embodiment of the vocal print authentication system 1 of the first embodiment is explained in conjunction with Fig. 4. Here, one example of the vocal print data used in the operational example of the first embodiment is shown using Fig. 3. In Fig. 3, as the vocal print data, the vocal print data of numbers, the vocal print data of ordinal numbers, the vocal print data of digits of numbers, the vocal print data of month, the vocal print data of letters, the vocal print data of symbols, and the vocal print data of clauses are provided.

Here, the vocal print data of the clause is the vocal print data of the clause element which is used for forming the vocal data in sentence and, for example, [Today is], [It is now] and the like are named. By combining or linking the vocal print data of the clause element with the vocal print data of numbers or letters, it is possible to form the vocal data which correspond to the password in sentence such as [Today is January first], [It is ten twelve now] and the like, for example. In the first embodiment explained here, an example in which the vocal print data of the clause is not used is explained. Hereinafter, the passwords in sentence are expressed in a form of [].

Fig. 4 shows a first method which performs the determination of vocal data by comparing the voice of every element and a second method which performs the determination of vocal data by comparing serial voices. Here, Fig. 4 shows a case in which, in comparing the voices of respective elements, the password <4156> is formed by the password forming means 7 and an authorized user responds to the password <4156>. On the other hand, Fig. 4 also shows a case in which, in comparing serial voices, a password <AB-12> is formed by the password forming means 7 and an unauthorized user responds to the password <AB-12>.

In the first method, when the password <4156> is formed by the password forming means 7, the vocal data forming means 8 reads out the vocal print data "four", "one", "fifty six" which correspond to the elements of the password <4>, <1>, <56> and the vocal print data "thousand", "hundred" which express the digit of the number and forms the vocal data "four thousand one hundred fifty six".

Here, it is also possible to form the vocal data by taking the euphony into consideration at the time of forming the vocal data.

On the other hand, the voice analysis means 11 samples the vocal data "four thousand one hundred fifty six" from the voice signal which the authorized user inputs.

The password determination means 12 performs the determination of the passwords by comparing respective elements "four", "thousand", "one", "hundred", "fifty six" of both vocal data "four thousand one hundred fifty six". Here, when the respective elements of both vocal data coincide with each other, it is determined that the passwords coincide with each other. Here, the determination of the passwords may adopt the coincidence of all elements which constitute the passwords as the condition of coincidence or the case in which the coincidence rate of the respective elements satisfies a predetermined value as the condition of the coincidence.

In the second method, when the password <AB-12> is formed by the password forming means 7, the vocal data forming means 8 reads out the vocal print data "a", "b", "hyphen", "twelve" corresponding to the elements <A>, <B>, <->, <12 > of the password <AB-12> and forms the vocal data "a b hyphen twelve".

Here, it is also possible to form the vocal data by taking the euphony into consideration at the time of forming the vocal data.

On the other hand, the voice analysis means 11 samples the vocal data "*a b hyphen twelve"* from the voice signal inputted by an unauthorized user. Here, the vocal data by the unauthorized user is indicated in italic.

The password determination means 12 performs the determination of the passwords by comparing the vocal data "a b hyphen twelve" and *"a b hyphen twelve"* as serial voices, and determines that the passwords do not coincide with each other when both vocal data do not coincide with each other.

Fig. 5A and Fig. 5B show comparison of examples using a serial voice in the second method. The comparison of the serial voices can be performed by comparing the change of intonation of the voices along a lapse of time.

Fig. 5A shows the change of intonation of the vocal data with respect to the password <1234> along a lapse of time, for example, using the vocal print data of the registrant. In the drawing, a broken line indicates an average value of the vocal print data of a plurality of times and a hatched strip portion indicates an allowable range of coincidence determination.

On the other hand, Fig. 5B shows the change of intonation of the vocal data along a lapse of time with respect to the password <1234> when an unauthorized user inputs the password <1234>. In the drawing, a broken line indicates the vocal data of the unauthorized user and the determination of the password is made by determining whether the vocal data falls in the inside of a hatched strip portion or not.

Here, the determination of the passwords may adopt the case in which all vocal data fall within an allowable range as the condition of coincidence or the case in which a rate that the vocal data falls within an allowable range satisfies a predetermined value as the condition of the coincidence.

Next, a processing example of the second and third embodiments of the vocal print authentication system of the present invention is explained in conjunction with the flow chart shown in Fig. 6. The password used in the second and third embodiments is a password which is constituted of a sentence. In the second embodiment, the authentication is performed by sampling predetermined elements from the vocal data of the sentence password. In the third embodiment, the authentication is performed using the vocal data of the whole sentence password.

The flow chart shown in Fig. 6 is substantially equal to the flow chart shown in Fig. 2 and differs from the flow chart shown in Fig. 2 with respect to step S27 to step S29. Here, only the steps S27 to S29 are explained and the explanation of processing in other steps is omitted.

The password request means 9 forms a question content which expects the password formed by the password forming means 7 as an answer thereof and requests the inputting of the answer by uttering voice to the determination requesting person (step S26) The password receiving means 10 receives the voice signal from the determination requesting person and the voice analyzing means 11 analyzes the voice signal and samples the vocal data from the sentence (step S27).

The vocal data forming means 8 acquires the vocal print data corresponding to the password which is formed by the password forming means 7 and forms the vocal data (step S28) .

Here, in the password receiving means 10, a time which lapses from a point of time that the question is delivered is counted and, when the password is not received within a predetermined time, the processing for no response is executed. The recognition result output means 13, upon receiving the result that there is no response, outputs that the personal authentication is not performed. Further, also when the recognition of the ID in step S24 turns out to be unsuccessful, the recognition result output means 13 outputs that the personal authentication is not performed.

The password determination means 12 compares the vocal data of the sentence obtained by the voice analysis performed by the voice analysis means 11 and the vocal data of the sentence formed by the vocal data forming means 8 (step S29) .

Next, examples of the manner of operation of the second and third embodiments of the vocal print authentication system according to the present invention are explained in conjunction with Fig. 7A and Fig. 7B, wherein Fig. 7A shows the example of the manner of operation of the second embodiment and Fig. 7B shows the example of the manner of operation of the third embodiment.

The second embodiment shows a mode in which the comparison is made with respect to some elements in the password sentence.

In Fig. 7A, an arbitrary sentence is selected from a plurality of examples of password sentences. The examples of the sentence passwords are formed in a mode that a blank part in which letters and numbers are incorporated is provided. The determination requesting person can arbitrarily respond to or fill in blank portions of the blank part. In this embodiment, for example, the examples of the sentence passwords [Today is ], [It is now] are shown. The determination requesting person responds to the selected sentence password by filling the blank portions of the sentence password by uttering voice.

The vocal data forming means 8 selects the arbitrary sentence from the plurality of examples of the sentence passwords and reads out the vocal print data which are used as numbers and letters to be incorporated into the blank portions of the example of the selected sentence passwords ([Today is ] in this embodiment) to form the vocal data.

In this embodiment, the vocal data are formed using only the vocal print data which are used as numbers and letters to be incorporated into the blank portions. In Fig. 7A, these vocal print data are expressed as *1, *2.

In this embodiment, it is possible to incorporate any arbitrary elements such as "April", "first" in the *1, *2, for example.

On the other hand, only the vocal data which correspond to the numbers and letters to be incorporated into the vocal data of the password which are inputted by the determination requesting person is sampled and is compared with the vocal data formed by the vocal data forming means 8.

Fig. 8 shows a case that the date is April first. The second embodiment corresponds to the password determination A shown in Fig. 8. When the data is April first for the sentence password example [Today is ], the password becomes [Today is April first]. In the second embodiment, the vocal data of "April" and "first" which correspond to the elements "April" and "first" are sampled from "Today is April first" which is the vocal data of [Today is April first] and, thereafter, the comparison is executed.

The third embodiment is a mode which performs the comparison with respect to all elements of the password sentence.

In Fig. 7B, in the same manner as Fig. 7A, an arbitrary sentience is selected from a plurality of examples of password sentences. The vocal data forming means 8 selects the arbitrary sentence from the plurality of examples of the sentence passwords and reads out the vocal print data of "Today is" which constitutes the element of each clause of the selected sentence password (here, [Today is ]) and the vocal print data which are used as numbers and letters to be incorporated into the blank portions of the example of the sentence password to form the "Today is *1 and *2" using the vocal data.

On the other hand, only the vocal data corresponding to the sentence "Today is*1, *2" is sampled from the vocal data of sentence based on the vocal data of the password which the determination requesting person inputs and are compared with the sentence formed by the vocal data forming means 8.

The third embodiment corresponds to the password determination B in Fig. 8. When the data is April first for the example of the sentence password [Today is ], the password becomes [Today is April first]. In the third embodiment, the whole sentence "Today is April first" which is the vocal data of [Today is April first] is compared.

The vocal print authentication system of the present invention is applicable to the prevention of an illegal access from a terminal on the network and, at the same time, is applicable to the prevention of intrusion into a specific region such as a building, a facility or the like.

## Claims

1. A vocal print authentication system (1) comprising :
voice recording means (4) for recording vocal print data of single elements of numbers and/or letters which constitute a password and vocal print data of link elements which links the respective single elements for every registrant;
password forming means (7) for forming a random password using the respective elements;
vocal data forming means (8) for forming vocal data which is obtained by vocalizing the password formed by the password forming means (7) using the vocal print data; and
password determination means (12) for determining whether a determination requesting person is the registrant or not,based on the collation between vocal data which is obtained due to the inputting by voice of the password by the determination requesting person and the vocal data which is formed by the vocal data forming means (8),
**characterized in that**
the vocal print authentication system (1) samples the vocal data of the respective elements included in a sentence which forms the password by analyzing the voice which the determination requesting person inputs and a time interval between the respective elements of said voice input, and
the password determination means (12) compares the sampled vocal data and time interval between said respective elements with the vocal data which is formed by the vocal data forming means (8) and the time interval between the respective elements for every element which is part of the password formed by the vocal data forming means, respectively.

2. A vocal print authentication system (I) according to claim 1, **characterized in that** the link elements are elements which indicate digits of the number and/or elements of symbol.

3. A vocal print authentication system (1) according to claim 1 or 2, **characterized in that** the voice recording means (4) records the vocal print data in association with an ID which is intrinsically set to each registrant, and the password forming means (7) starts the formation of the password based on the recognition of the ID.

4. A vocal print authentication system (1) according to one of claims 1 to 3, **characterized in that** the vocal print authentication system (1) includes password request means (9) which forms a question which requires inputting by voice of the password and requests the determination requesting person the inputting by voice of the password for the formed question.

5. A vocal print authentication system (1) according to one of claims 1 to 4, **characterized in that** the vocal print data recorded by the voice recording means (4) includes a predetermined authentication range based on the inputting of a plurality of voices for each same element obtained from the registrant.

6. A vocal print authentication system (1) according to one of claims 1 to 5, **characterized in that** the password forming means (7) selects an arbitrary number of single elements from the respective single elements constituted of the numbers and/or letters, wherein the arbitrary number is at least two or more, and the password is formed by arranging the selected single elements in arbitrary order.

7. A vocal print authentication system (1) according to one of claims 1 to 6, **characterized in that** the vocal data forming means (8) takes out the vocal print data corresponding to the respective single elements which the password formed by the password forming means (7) includes from the voice recording means (4), the vocal print data is arranged in accordance with the arrangement order of the single elements of the password, and the link elements are inserted between the respective single elements thus forming the vocal data of the password.

8. A vocal print authentication system (1) according to claim 7, **characterized in that** the password determination means (12) samples vocal data of the respective elements which form the password by analyzing the voice which the determination requesting person inputs, and compares the sampled vocal data and the vocal data formed by the vocal data forming means (8) for every element.

9. A vocal print authentication system (1) according to claim 7, **characterized in that** the password determination means (12) samples vocal data of the respective elements which form the password by analyzing the voice which the determination requesting person inputs, and compares the sampled vocal data and the vocal data formed by the vocal data forming means (8) based on a voice level of the serial password and/or a time interval between respective elements.

10. A vocal print authentication system (1) according to one of claims 1 to 5 and 7 to 9, **characterized in that** the password forming means (7) forms the password by incorporating the single elements of the numbers and/or the letters at predetermined positions in a sentence which forms the password.

11. A vocal print authentication system (1) according to claim 10, **characterized in that** the vocal data forming means (8) forms the vocal data of the password
by sampling the vocal print data corresponding to the respective elements which the password formed by the password forming means (7) includes from the voice recording means (4), and
by arranging the sampled vocal print data at positions where the respective elements in a sentence which forms the password are arranged.

12. A vocal print authentication system (1) according to claim 11, **characterized in that** the password determination means (12) samples the vocal data of the sentence which forms the password by analyzing the voice which the determination requesting person inputs and compares the sampled vocal data of the sentence and the vocal data of the sentence formed by the vocal data forming means (8).

13. A vocal print authentication system (1) according to one of claims 1 to 12,
**characterized in that** the voice recording means (4) records an element of clause included in a sentence which forms the password in addition to the respective elements, and
the vocal data forming means (8) samples the vocal print data of the respective elements included in the password which is formed by the password forming means (7) from the voice recording means (4), and
at positions where the respective elements in the sentence are arranged, the respective vocal print data are arranged thus forming the vocal data of the password.

14. A vocal print authentication program product adapted to execute, when run on a computer, the steps of
recording vocal print data of single elements of numbers and/or letters which constitute a password and vocal print data of link elements which links the respective single elements for every registrant;
forming a random password using the respective elements ;
forming vocal data which is obtained by vocalizing the password formed by the password forming means (7) using the vocal print data; and
determining whether a determination requesting person is the registrant or not, based on the collation between vocal data which is obtained due to the inputting by voice of the password by the determination requesting person and the vocal data which is formed by the vocal data forming means (8) to perform respective functions thereof,
**characterized by** the steps of:
sampling the vocal data of the respective elements included in a sentence which forms the password by analyzing the voice which the determination requesting person inputs and a time interval between the respective elements of said voice input and
comparing the sample vocal data and time interval between said respective elements with the vocal data which is formed by the vocal data forming means (8) and the time interval between the respective elements for every element which is part of the password formed by the vocal data forming means, respectively.

## Patentansprüche

1. Stimmabdruck-Aüthentifizierungssystem (1) das umfasst:
eine Stimmaufzeichnungseinrichtung (4) zum Aufzeichnen von Stimmabdruckdaten einzelner Elemente aus Zahlen und/oder Buchstaben, die ein Passwort bilden, und Stimmabdruckdaten aus Verbindungselementen, die die jeweiligen einzelnen Elemente für jeden zu Registrierenden verbinden;
eine Passwort-Erzeugungseinrichtung (7) zum Erzeugen eines beliebigen Passworts unter Verwendung der jeweiligen Elemente;
eine Stimmdaten-Erzeugungseinrichtung (8) zum Erzeugen von Stimmdaten, die gewonnen werden, indem das durch die Passwort-Erzeugungseinrichtung (7) erzeugte Passwort unter Verwendung der Stimmabdruckdaten vokalisiert wird; und
eine Passwort-Bestimmungseinrichtung (12), die basierend auf dem Vergleich zwischen Stimmdaten, die aufgrund des Eingebens des Passworts durch die Feststellung anfordernde Person mittels Stimme gewonnen werden, und den Stimmdaten, die durch die Stimmdaten-Erzeugungseinrichtung (8) erzeugt werden, feststellt, ob eine Feststellung anfordernde Person der zu Registrierende ist oder nicht,
**dadurch gekennzeichnet, dass**
das Stimmabdruck-Authentifizierungssystem (1) die Stimmdaten der jeweiligen Elemente, die in einem Satz enthalten sind, der das Passwort bildet, durch Analysieren der Stimme, die die Feststellung anfordernde Person eingibt, und eines Zeitintervalls zwischen den jeweiligen Elementen der Stimmeingabe abtastet, und
die Passwort-Feststelleinrichtung (12) die abgetasteten Stimmdaten und das Zeitintervall zwischen den jeweiligen Elementen mit den durch die Stimmdaten-Erzeugungseinrichtung (8) erzeugten Stimmdaten und dem Zeitintervall zwischen den jeweiligen Elementen für jedes Element vergleicht, das Teil des jeweils durch die Stimmdatenebene-Erzeugungseinrichtung erzeugten Passworts ist.

2. Stimmabdruck-Authentifizierungssystem (1) nach Anspruch 1, **dadurch gekennzeichnet, dass** die Verbindungselemente Elemente sind, die Ziffern der Zahl und/oder Elemente eines Symbols anzeigen.

3. Stimmabdruck-Authentifizierungssystem (1) nach Anspruch 1 oder 2, **dadurch gekennzeichnet, dass** die Stimmaufzeichnungseinrichtung (4) die Stimmabdruckdaten in Verbindung mit einer Kennung aufzeichnet, die jedem Registrierenden eigen ist, und die Passworte/Erzeugungseinrichtung (7) die Erzeugung des Passworts auf Basis des Erkennens der Kennung beginnt.

4. Stimmabdruck-Authentifizierungssystem (1) nach einem der Ansprüche 1-3, **dadurch gekennzeichnet, dass** das Stimmabdruck-Authentifizierungssystem (1) eine Passwort-Anforderungseinrichtung (9) enthält, die eine Frage erzeugt, die Eingabe des Passworts mit der Stimme erfordert und die von der Feststellung anfordernden Person die Eingabe des Passworts mit der Stimme auf der erzeugten Frage anfordert.

5. Stimmabdruck-Authentifizierungssystem (1) nach einem der Ansprüche 1-4, **dadurch gekennzeichnet, dass** die durch die Sprachaufzeichnungseinrichtung (4) aufgezeichneten Stimmabdruckdaten einen vorgegebenen Authentifizierungsbereich enthalten, der auf der Eingabe einer Vielzahl von Stimmen für das jeweils gleiche Element, die von dem zu Registrierenden erfasst wird, basiert.

6. Stimmabdruck-Authentifizierungssystem (1) nach einem der Ansprüche 1-5, **dadurch gekennzeichnet, dass** die Passwort-Erzeugungseinrichtung (7) eine beliebige Anzahl einzelner Elemente aus den jeweiligen einzelnen Elementen auswählt, die aus den Zahlen und/oder Buchstaben bestehen, wobei die beliebige Anzahl wenigstens zwei oder mehr beträgt und das Passwort erzeugt wird, indem die ausgewählten einzelnen Elemente in beliebiger Reihenfolge angeordnet werden.

7. Stimmabdruck-Authentifizierungssystem (1) nach einem der Ansprüche 1-6, **dadurch gekennzeichnet, dass** die Stimmdaten-Erzeugungseinrichtung (8) die Stimmabdruckdaten, die den jeweiligen einzelnen Elementen entsprechen, die das durch die Passwort-Erzeugungseinrichtung (7) erzeugte Passwort enthält, aus der Stimmaufzeichnungseinrichtung (4) entnimmt, wobei die Stimmabdruckdaten entsprechend der Anordnungsreihenfolge der einzelnen Elemente des Passworts angeordnet werden und die Verbindungselemente zwischen die jeweiligen einzelnen Elemente eingefügt werden, um so die Stimmdaten des Passworts zu erzeugen.

8. Stimmabdruck-Authentifizierungssystem (1) nach Anspruch 7, **dadurch gekennzeichnet, dass** die Passwort-Bestimmungseinrichtung (12) Stimmdaten der jeweiligen Elemente, die das Passwort bilden, durch Analysieren der Stimme abtastet, die die Feststellung anfordernde Person eingibt, und die abgetasteten Stimmdaten sowie die durch die Stimmdaten-Erzeugungseinrichtung (8) erzeugten Stimmdaten für jedes Element vergleicht.

9. Stimmabdruck-Authentifizierungssystem (1) nach Anspruch 7, **dadurch gekennzeichnet, dass** die Passwort-Bestimmungseinrichtung (12) Stimmdaten der jeweiligen Elemente, die das Passwort bilden, durch Analysieren der Stimme abtastet, die die Feststellung anfordernde Person eingibt, und die abgetasteten Stimmdaten sowie die durch die Stimmdaten-Erzeugungseinrichtung (8) erzeugten Stimmdaten auf Basis eines Stimmpegels des seriellen Passworts und/oder eines Zeitintervalls zwischen jeweiligen Elementen vergleicht.

10. Stimmabdruck-Authentifizierungssystem (1) nach einem der Ansprüche 1-5 und 7-9, **dadurch gekennzeichnet, dass** die Passwort-Erzeugungseinrichtung (7) das Passwort durch Integrieren der einzelnen Elemente der Zahlen und/oder der Buchstaben an vorgegebenen Positionen in einem Satz erzeugt, der das Passwort bildet.

11. Stimmabdruck-Authentifizierungssystem (1) nach Anspruch 10, **dadurch gekennzeichnet, dass** die Stimmdaten-Erzeugungseinrichtung (8) die Stimmdaten des Passworts durch Abtasten der Stimmabdruckdaten, die den jeweiligen Elementen entsprechen, die das durch die Passwort-Erzeugungseinrichtung (7) erzeugte Passwort enthält, von der Stimmaufzeichnungseinrichtung (4), und durch Anordnen der abgetasteten Stimmabdruckdaten an Positionen, an denen die jeweiligen Elemente in einem Satz angeordnet sind, der das Passwort bildet, erzeugt.

12. Stimmabdruck-Authentifizierungssystem (1) nach Anspruch 11, **dadurch gekennzeichnet**, das die Passwort-Bestimmungseinrichtung (12) die Stimmdaten des Satzes, der das Passwort bildet, durch Analysieren der Stimme abtastet, die die Feststellung anfordernde Person eingibt, und die abgetasteten Stimmdaten des Satzes sowie die Stimmdaten des durch die Stimmdaten-Erzeugungseinrichtung (8) erzeugten Satzes vergleicht.

13. Stimmabdruck-Authentifizierungssystem (1) nach einem der Ansprüche 1-12, **dadurch gekennzeichnet**, das die Stimmaufzeichnungseinrichtung (4) ein Element eines Nebensatzes, der in einem Satz enthalten ist, der das Passwort bildet, zusätzlich zu den jeweiligen Elementen aufzeichnet, und
die Stimmdaten-Erzeugungseinrichtung (8) die Stimmabdruckdaten der jeweiligen Elemente, die in dem Passwort enthalten sind, das durch die Passwort-Erzeugungseinrichtung (7) erzeugt wird, von der Stimmaufzeichnungseinrichtung (4) abtastet, und
an Positionen an denen die jeweiligen Elemente in dem Satz angeordnet sind, die jeweiligen Stimmabdruckdaten angeordnet werden, um so die Stimmdaten des Passworts zu erzeugen.

14. Stimmabdruck-Authentifizierungs-Programmerzeugnis, das so eingerichtet ist, dass es, wenn es auf einem Computer läuft, die folgende Schritte ausführt:
Aufzeichnen von Stimmabdruckdaten einzelner Elemente von Zahlen und/oder Buchstaben, die ein Passwort bilden, und von Stimmabdruckdaten aus Verbindungselementen, die die jeweiligen einzelnen Elemente verbinden, für jeden zu Registrierenden;
Erzeugen eines Zufalls-Passworts unter Verwendung der jeweiligen Elemente; Erzeugen von Sprachdaten, die gewonnen werden, indem das durch die Passwort-Erzeugungseinrichtung (7) erzeugte Passwort unter Verwendung der Stimmabdruckdaten vokalisiert wird; und
Bestimmen, ob eine Feststellung anfordernde Person der zur Registrierende ist oder nicht, auf Basis des Vergleichs zwischen Stimmdaten, die aufgrund des Eingebens des Passworts durch die Feststellung anfordernde Person mittels Stimme gewonnen werden, und der durch die Stimmdaten-Erzeugungseinrichtung (8) erzeugten Stimmdaten, um jeweilige Funktionen derselben durchzuführen,
**gekennzeichnet durch** die folgenden Schritte:
Abtasten der Stimmdaten der jeweiligen Elemente, die in einem Satz enthalten sind, der das Passwort bildet, **durch** Analysieren der Stimme, die die Feststellung anfordernde Person eingibt, und eines Zeitintervalls zwischen den jeweiligen Elementen der Stimmeingabe, und
Vergleichen der Abtast-Stimmdaten und des Zeitintervalls zwischen den jeweiligen Elementen mit den **durch** die Stimmdaten-Erzeugungseinrichtung (8) erzeugten Stimmdaten und dem Zeitintervall zwischen den jeweiligen Elementen für jedes Element, das Teil des jeweils **durch** die Stimmdaten-Erzeugungseinrichtung erzeugten Passworts ist.

## Revendications

1. Système d'authentification d'empreinte vocale (1) comportant :
des moyens d'enregistrement vocal (4) pour enregistrer des données d'empreinte vocale d'éléments uniques de nombres et/ou lettres qui constituent un mot de passe et des données d'empreinte vocale d'éléments de liaison qui relient les éléments uniques respectifs pour chaque personne inscrite ;
des moyens de formation de mot de passe (7) pour former un mot de passe aléatoire en utilisant les éléments respectifs ;
des moyens de formation de données vocales (8) pour former des données vocales qui sont obtenues en effectuant une vocalisation du mot de passe formé par les moyens de formation de mot de passe (7) en utilisant les données d'empreinte vocale ; et
des moyens de détermination de mot de passe (12) pour déterminer si une personne demandant une détermination est ou n'est pas la personne inscrite en se basant sur la comparaison entre des données vocales qui sont obtenues par l'entrée vocale du mot de passe par la personne demandant la détermination et des données vocales qui sont formées par les moyens de formation de données vocales (8) ;
**caractérisé en ce que**
le système d'authentification d'empreinte vocale (1) échantillonne les données vocales des éléments respectifs inclus dans une phrase qui forme le mot de passe en analysant la voix que la personne demandant la détermination entre et un intervalle de temps entre les éléments respectifs de ladite entrée vocale, et
les moyens de détermination de mot de passe (12) comparent les données vocales échantillonnées et ledit intervalle de temps respectif entre des éléments avec les données vocales qui sont formées par les moyens de formation de données vocales (8) et avec l'intervalle de temps entre les éléments respectifs pour chaque élément qui fait partie du mot de passe formé par les moyens de formation de données vocales, respectivement.

2. Système d'authentification d'empreinte vocale (1) selon la revendication 1, **caractérisé en ce que** les éléments de liaison sont des éléments qui indiquent des chiffres du numéro et/ou des éléments de symbole.

3. Système d'authentification d'empreinte vocale (1) selon la revendication 1 ou 2, **caractérisé en ce que** les moyens d'enregistrement vocal (4) enregistrent les données d'empreinte vocale en association avec un identifiant qui est intrinsèquement établi pour chaque personne inscrite, et les moyens de formation de mot de passe (7) commencent la formation du mot de passe sur la base de la reconnaissance de l'identifiant.

4. Système d'authentification d'empreinte vocale (1) selon l'une quelconque des revendications 1 à 3, **caractérisé en ce que** le système d'authentification d'empreinte vocale (1) inclut des moyens de demande de mot de passe qui forment une question, laquelle nécessite l'entrée par la voix du mot de passe, et demandent à la personne demandant la détermination d'entrée vocalement le mot de passe pour la question formée.

5. Système d'authentification d'empreinte vocale (1) selon l'une quelconque des revendications 1 à 4, **caractérisé en ce que** les données d'empreinte vocale enregistrées par les moyens d'enregistrement vocal (4) incluent une plage d'authentification prédéterminée basée sur l'entrée d'une pluralité de voix pour chaque élément identique obtenu de la personne inscrite.

6. Système d'authentification d'empreinte vocale (1) selon l'une quelconque des revendications 1 à 5, **caractérisé en ce que** les moyens de formation de mot de passe (7) sélectionnent un nombre arbitraire d'éléments uniques à partir des éléments uniques respectifs constitués des nombres et/ou des lettres, le nombre arbitraire étant au moins égal à deux ou plus, et le mot de passe étant formé en agençant les éléments uniques sélectionnés dans un ordre arbitraire.

7. Système d'authentification d'empreinte vocale (1) selon l'une quelconque des revendications 1 à 6, **caractérisé en ce que** les moyens de formation de données vocales (8) extraient les données d'empreinte vocale correspondant aux éléments uniques respectifs, que le mot de passe formé par les moyens de formation de mot de passe (7) inclut, à partir des moyens d'enregistrement vocal (4), **en ce que** les données d'empreinte vocale sont agencées conformément à l'ordre d'agencement des éléments uniques du mot de passe, et **en ce que** les éléments de liaison sont insérés entre les éléments uniques respectifs formant ainsi les données vocales du mot de passe.

8. Système d'authentification d'empreinte vocale (1) selon la revendication 7, **caractérisé en ce que** les moyens de détermination de mot de passe (12) échantillonnent des données vocales des éléments respectifs qui forment le mot de passe en analysant la voix que la personne demandant la détermination entre, et comparent les données vocales échantillonnées et les données vocales formées par les moyens de formation de données vocales (8) pour chaque élément.

9. Système d'authentification d'empreinte vocale (1) selon la revendication 7, **caractérisé en ce que** les moyens de détermination de mot de passe (12) échantillonnent des données vocales des éléments respectifs qui forment le mot de passe en analysant la voix que la personne demandant la détermination entre, et comparent les données vocales échantillonnées et les données vocales formées par les moyens de formation de données vocales (8) sur la base d'un niveau vocal du mot de passe série et/ou d'un intervalle de temps entre des éléments respectifs.

10. Système d'authentification d'empreinte vocale (1) selon l'une quelconque des revendications 1 à 5 et 7 à 9, **caractérisé en ce que** les moyens de formation de mot de passe (7) forment le mot de passe en incorporant les éléments uniques des nombres et/ou des lettres à des positions prédéterminées dans une phrase qui forme le mot de passe.

11. Système d'authentification d'empreinte vocale (1) selon la revendication 10, **caractérisé en ce que** les moyens de formation de données vocales (8) forment les données vocales du mot de passe
en échantillonnant les données d'empreinte vocale correspondant aux éléments respectifs que le mot de passe formé par les moyens de formation de mot de passe (7) inclut à partir des moyens d'enregistrement vocal (4), et
en agençant les données d'empreinte vocale échantillonnées à des positions où les éléments respectifs dans une phrase qui forme le mot de passe sont agencés.

12. Système d'authentification d'empreinte vocale (1) selon la revendication 11, **caractérisé en ce que** les moyens de détermination de mot de passe (12) échantillonnent les données vocales de la phrase qui forme le mot de passe en analysant la voix que la personne demandant la détermination entre et comparent les données vocales échantillonnées de la phrase et les données vocales de la phrase formées par les moyens de formation de données vocales (8).

13. Système d'authentification d'empreinte vocale (21) selon l'une quelconque des revendications 1 à 12, **caractérisé en ce que** les moyens d'enregistrement vocal (4) enregistrent un élément de clause inclus dans une phrase qui forme le mot de passe en plus des éléments respectifs, et
les moyens de formation de données vocales (8) échantillonnent les données d'empreinte vocale des éléments respectifs inclus dans le mot de passe qui est formé par les moyens de formation de mot de passe (7) à partir des moyens d'enregistrement vocal (4), et
à des positions où les éléments respectifs dans la phrase sont agencés, les données d'empreinte vocale respectives sont agencées formant ainsi les données vocales du mot de passe.

14. Produit de programme d'authentification d'empreinte vocale adapté pour exécuter, lorsque exécuté sur un ordinateur, les étapes consistant à :
enregistrer des données d'empreinte vocale d'éléments uniques de nombres et/ou lettres qui constituent un mot de passe et de données d'empreinte vocale d'éléments de liaison qui relient les éléments uniques respectifs pour chaque personne inscrite,
former un mot de passe aléatoire en utilisant les éléments respectifs,
former des données vocales qui sont obtenues en effectuant une vocalisation du mot de passe formé par les moyens de formation de mot de passe (7) en utilisant les données d'empreinte vocale, et
déterminer si une personne demandant la détermination est ou n'est pas la personne inscrite, sur la base de la comparaison entre des données vocales qui sont obtenues par l'entrée vocale du mot de passe par la personne demandant la détermination et des données vocales qui sont formées par les moyens de formation de données vocales (8) pour exécuter des fonctions respectives correspondantes, **caractérisé par** les étapes consistant à :
échantillonner les données vocales des éléments respectifs inclus dans une phrase qui forme le mot de passe en analysant la voix que la personne demandant la détermination entre et un intervalle de temps entre les éléments respectifs de ladite entrée vocale, et
comparer les données vocales échantillonnées et l'intervalle de temps entre lesdits éléments respectifs avec les données vocales qui sont formées par les moyens de formation de données vocales (8) et avec l'intervalle de temps entre les éléments respectifs pour chaque élément qui fait partie du mot de passe formé par les moyens de formation de données vocales, respectivement.
